# EUROPÄISCHE PATENTSCHRIFT

(11) **EP 2 015 369 B1**
(45) Veröffentlichungstag und Bekanntmachung des Hinweises auf die Patenterteilung: **27.02.2013**
(21) Anmeldenummer: 08007136.8
(22) Anmeldetag: 10.04.2008
(51) Int. Cl.: H01L 31/042, F24J 2/54

(54) **Lagergestell zum Abstützen von flächigen Solarpaneelen**
Support rack for supporting flat solar panels
Structure de support destinée à soutenir des panneaux solaires plats

(30) Priorität: 06.06.2007 DE 202007007970 U
(43) Veröffentlichungstag der Anmeldung: 14.01.2009
(73) Patentinhaber: IDEEMATEC Deutschland GmbH, 94574 Wallerfing (DE)
(72) Erfinder: Kufner, Johann, 94527 Aholming (DE)
(74) Vertreter: Grünberg, Thomas

(56) Entgegenhaltungen:
- EP-A2- 1 626 140
- WO-A1-2004/044501
- DE-A1- 3 236 506
- DE-A1- 4 443 834
- DE-A1-102005 013 334
- DE-U1- 8 520 407
- FR-A1- 2 532 727
- US-A- 4 558 551
- US-A- 6 123 067

## Beschreibung

Die Erfindung betrifft ein Lagergestell zum Abstützen von flächigen Solarpaneelen, mit einem in seiner montierten Stellung im wesentlichen vertikalen und an seinem unteren Ende im Erdboden oder an einer ortsfesten Verankerungsstelle lagerbaren Stützmast, an dem die auf einer ebenen Paneelhalterung aufruhenden Solarpaneele mittels einer Stützkonstruktion gehalten und zur Azimut-Nachführung um die Mastachse drehbar sind.

Derartige Lagergestelle sind in den verschiedensten Ausführungsformen bekannt, wobei eine Nachführung des Elevationswinkels der Solarpaneele, also eine Nachführung des Winkels der Solarpaneele gegenüber der Horizontalen, zusätzlich möglich ist. Die Stützkonstruktion besteht bei einigen bekannten Modellen aus Stützstreben, die an der Rückseite der Paneelhalterung angreifen. Bei anderen bekannten Modellen besteht das Lagergestell im wesentlichen nur aus dem vertikalen Stützmast selbst, der etwa mittig an der Rückseite der betreffenden Paneelhalterung angreift und dieselbe demgemäß nur an dieser mehr oder minder punktförmigen Stelle abstützt. Auch bei den bekannten Konstruktionen, die Stützstreben verwenden, liegen die Angriffspunkte dieser Streben im Mittelbereich an der Rückseite der Paneelhalterung, was den Nachteil hat, dass diese zum Stand der Technik zählenden Lagergestelle und Paneelhalterungen insgesamt eine nur begrenzte Wind- und Schnee-last aufnehmen können.

Ein weiterer Nachteil der bekannten Lagergestelle, deren Stützkonstruktionen aus Stützstreben zusammengesetzt sind, besteht darin, dass diese Stützkonstruktionen aufgrund ihrer relativ komplizierten Ausführung bereits am Herstellungsort zumindest teilweise zusammengeschweißt werden und auf diese Weise beim Versand sperrige Transportgüter darstellen. Deshalb ist die Zahl dieser Lagergestelle, die in einem Transport-Container oder einem ähnlichen Transportmittel untergebracht werden können, relativ begrenzt.

Aus der Druckschrift WO 2004/044501 ist ein Lagergestell zum Abstützen von flächigen Solarpaneelen bekannt. Dieses Lagergestell umfasst einen Stützmast, an dem eine Paneelhalterung drehbar gelagert ist.

Aus der Druckschrift DE 32 36 506 ist eine Vorrichtung zur Halterung eines Solarpaneels bekannt, die einen Sockel umfasst, auf dem ein Stützmast angeordnet ist, an welchem eine Tragekonstruktion für das Solarpaneel beweglich moniert ist.

Aus der Druckschrift DE 10 2005 013 334 A1 ist ein Lagergestell für Solarpaneele bekannt, das einen Stützmast umfasst, an welchem eine Tragekonstruktion drehbar montiert ist, an welcher die Solarpaneele gelagert sind.

Ziel der Erfindung ist es, ein Lagergestell der eingangs genannten Art mit einer Stützkonstruktion für die Paneelhalterung zu schaffen, weiches hohen Wind- und Schnee-Lasten standhält und trotzdem auf Grund seines relativ einfachen Aufbaues im zerlegten Zustand zum Aufstellungsort transportiert werden kann.

Dieses Ziel gemäß der Erfindung wird durch die Maßnahmen des kennzeichnenden Teiles des beiliegenden Anspruches 1 erreicht.

Diese erfindungsgemäßen Merkmale erbringen den Vorteil, dass aufgrund der besonderen Ausbildung der Stützkonstruktion die Paneelhalterung rückseitig an mehreren, über deren gesamte Fläche verteilten Bereichen oder Stellen abgestützt werden kann, nämlich an ihrem unteren mittleren Bereich und den beiden dazu seitlichen unteren Bereichen als auch an mehreren Stellen am oberen rückseitigen Bereich der Paneelhalterung, was durch die erfindungsgemäß zusätzlich vorgesehenen Stützelemente zwischen diesem oberen Bereich und der die Hypothenuse des Stützdreieckes bildenden Zentralstrebe realisiert wird. Dieses erfindungsgemäß aus drei Zentralstreben bestehende Stützdreieck, welches am oberen Mastende an einem zentralen Abstützteil befestigt ist, gewährleistet dabei, dass die in den abgestützten Bereichen der Paneelhalterung erzeugten Wind- bzw. Schnee-Lasten symmetrisch in die erfindungsgemäße Stützkonstruktion abgeleitet werden, da das Stützdreieck symmetrisch zur Mastachse in einer im wesentlichen horizontalen Ebene angeordnet und an allen seinen Dreieckpunkten durch Stützstreben abgestützt ist, die schräg nach unten zu einer Abstützstelle am unteren Mastende hin verlaufen. Auf diese Weise bildet das am zentralen Abstützteil befestigte Stützdreieck mit den schräg zur Abstützstelle am unteren Mastende hin verlaufenden Stützstreben eine Art Unterkonstruktion, welche die von der Paneelhalterung erzeugten Belastungen über die an der Rückseite dieser Paneelhalterung angreifenden Streben bzw. Stützelemente symmetrisch aufnimmt und in den Erdboden bzw. in die ortsfeste Verankerungsstelle des Stützmastes ableitet. Dadurch werden Kippmomente des Lagergestelles auf ein Minimum reduziert und übermäßige Belastungen desselben ausgeschlossen.

Dieser Umstand begünstigt eine kostensparende Leichtbauweise des erfindungsgemäßen Lagergestelles. Aufgrund dessen und im Hinblick auf seine relativ einfache Konstruktion kann ein erfindungsgemäßes Lagergestell vollständig am Aufstellungsort zusammengesetzt werden, was einen Transport desselben im völlig zerlegten Zustand mit sich bringt. Dadurch können in einem Transport-Container o. dgl. eine viel größere Anzahl von Lagergestellen vom Herstellungs- zum Aufstellungs-Ort transportiert werden, als wie dies bei solchen Lagergestellen der Fall ist, die komplett oder zumindest teilweise montiert zum Herstellungsort transportiert werden.

Um bei einem erfindungsgemäßen Lagergestell einen fest eingestellten Elevationswinkel zu erreichen, sind die Maßnahmen gemäß den beiliegenden Ansprüchen 2 - 4 für diesen Zweck besonders geeignet.

Demgegenüber kann mit den Maßnahmen gemäß den beiliegenden Ansprüchen 5 und 6 ein einstellbarer Elevationswinkel der auf der Paneelhalterung aufruhenden Solarpaneele erreicht werden.

In diesem Zusammenhang kann gemäß den beiliegenden Ansprüchen 7 und 8 der Elevationswinkel sowohl manuell als auch durch Stellmotor eingestellt werden. Beide Möglichkeiten sind bei einem erfindungsgemäßen Lagergestell ebenfalls realisierbar.

Der beiliegende Anspruch 9 kennzeichnet eine zur Stabilitätserhöhung beitragende Weiterentwicklung einer an sich bekannten Paneelhalterung, wie sie z.B. bei einem erfindungsgemäßen Lagergestell Verwendung finden kann.

Zur Realisierung der Azimutnachführung der Solarpaneele gibt es bei einem erfindungsgemäßen Lagergestell zwei Möglichkeiten. Einerseits kann der Stützmast an seinem unteren Ende axial drehbar verankert werden. Diese erste Möglichkeit liegt den Maßnahmen gemäß den beiliegenden Ansprüchen 10 und 11 zugrunde. Andererseits kann zur Realisierung der Azimutnachführung der Solarpaneele der Stützmast an seinem unteren Ende drehfest verankert werden, während demgegenüber die Stützkonstruktion mit dem zentralen Abstützteil drehbar ist. Diese Alternative liegt den Merkmalen gemäß den beigefügten Ansprüchen 12 und 13 zugrunde, die für diesen Zweck zweckmäßige und vorteilhafte Merkmale kennzeichnen.

Für diese zweite Alternative können zur zusätzlichen Abstützung der Abstützstelle am unteren Mastende zusätzliche Haltestreben vorgesehen sein, wie dies im beiliegenden Anspruch 14 beansprucht ist. Die Abstützstelle am unteren Mastende kann bei dieser zweiten Alternative als plattenförmiges Flanschteil ausgeführt sein, wie es in den Ansprüchen 15 und 16 beansprucht ist.

Der im Anspruch 16 mitbeanspruchte Lagerring am plattenförmigen Flanschteil kann durch die Maßnahmen des beiliegenden Anspruches 17 drehfest an dem Flanschteil gehalten werden.

Eine vorteilhafte Ausführungsform dieses Lagerringes ist in den Ansprüchen 18 und 19 beansprucht.

Der Gegenstand des Anspruches 20 stellt eine schnelle und bequeme Auswechselung des Lagerringes sicher, indem die beiden Halbschalen des plattenförmigen Flanschteiles voneinander getrennt werden.

Eine für ein erfindungsgemäßes Lagergestell besonders geeignete Ausbildung des zentralen Abstützteiles ist in den Ansprüchen 21 und 22 gekennzeichnet, da die vorgesehenen Anschlussflansche eine schnelle und bequeme Befestigung der Streben der Stützkonstruktion ermöglichen.

Während der beiliegende Anspruch 23 geeignete Materialien für eine erfindungsgemäße Stützkonstruktion aufzählen, können gemäß beiliegendem Anspruch 24 die Teile der Stützkonstruktion durch Schraub- und/oder SchweißVerbindungen miteinander verbunden werden. In diesem Zusammenhang stellen vor allem Schraub-Verbindungen sicher, dass erfindungsgemäße Lagergestelle im zerlegten Zustand transportiert und in rascher und bequemer Weise am Aufstellungsort zusammengebaut werden können. Diese Möglichkeit wird dadurch begünstigt, wenn - wie im beiliegenden Anspruch 25 beansprucht - für sämtliche Schraubverbindungen Schrauben, Muttern und Unterlegscheiben jeweils gleicher Größe Verwendung finden.

Die Erfindung wird im Folgenden anhand schematischer, nicht maßstäblicher Zeichnungen an mehreren Ausführungsbeispielen noch näher erläutert. In den Zeichnungen zeigen:
Figur 1 eine perspektivische Rückansicht einer ersten Ausführungsform eines erfindungsgemäßen Lagergestelles mit einem fest eingestellten Elevationswinkel,
Figur 2 die gleiche Ansicht von Figur 1 ohne Perspektive,
Figur 3 eine Seitenansicht der ersten Ausführungsform,
Figur 4 eine Draufsicht gemäß der Schnittlinie I - I von Figur 2 bzw. 3,
Figur 5 eine der Figur 4 entsprechende Darstellung einer zweiten Ausführungsform, bei der der Elevationswinkel einstellbar ist,
Figur 6 eine Rückansicht dieser zweiten Ausführungsform,
Figur 7 ein durch Stellmotor teleskopartig verlängerbares Stützelement, wie es bei der zweiten Ausführungsform von Figur 6 verwendbar ist,
Figur 8 ein manuell teleskopartig verlängerbares Stützelement, welches ebenfalls bei der zweiten Ausführungsform gemäß Figur 6 Verwendung finden kann,
Figur 9 einen axialen Längsschnitt längs eines drehfest verankerten Stützmastes mit drehbarem Lagergestell und Drehantrieb zur entsprechenden Azimut-Nachführung,
Figur 10 eine perspektivische Ansicht des erfindungsgemäß verwendeten zentralen Abstützteiles,
Figur 11 die in Figur 9 vorgesehene Ausführungsform für die untere Abstützstelle der Stützkonstruktion in Draufsicht,
Figur 12 eine Schnittdarstellung längs der Schnittlinie II - II von Figur 11,
Figur 13 den in den Figuren 9, 11 und 12 verwendeten Lagerring in Draufsicht, und
Figur 14 eine der Figur 9 ähnliche Darstellung, bei der aber der Stützmast drehbar gelagert ist.

In den Zeichnungen und der nachfolgenden Figuren - Beschreibung sind einander entsprechende Teile mit den gleichen Bezugszeichen bezeichnet.

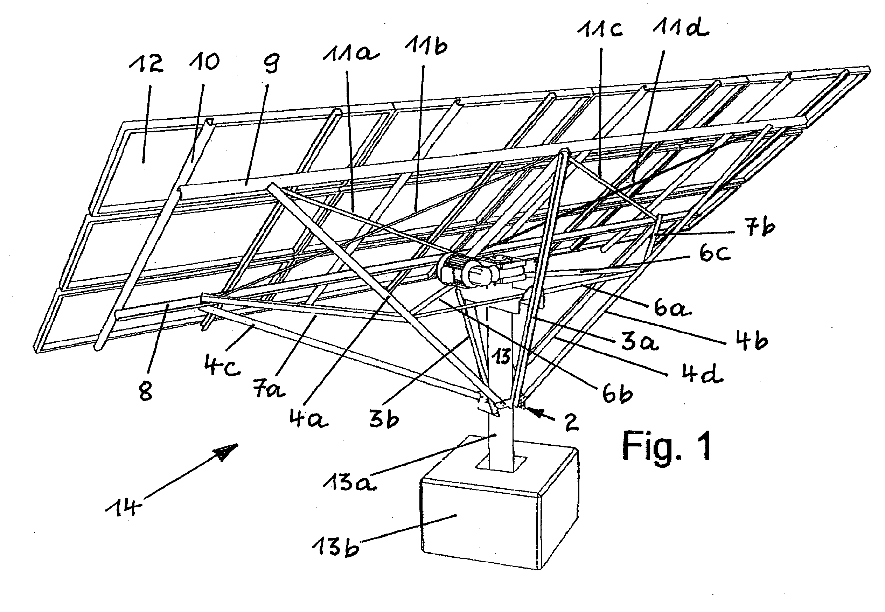

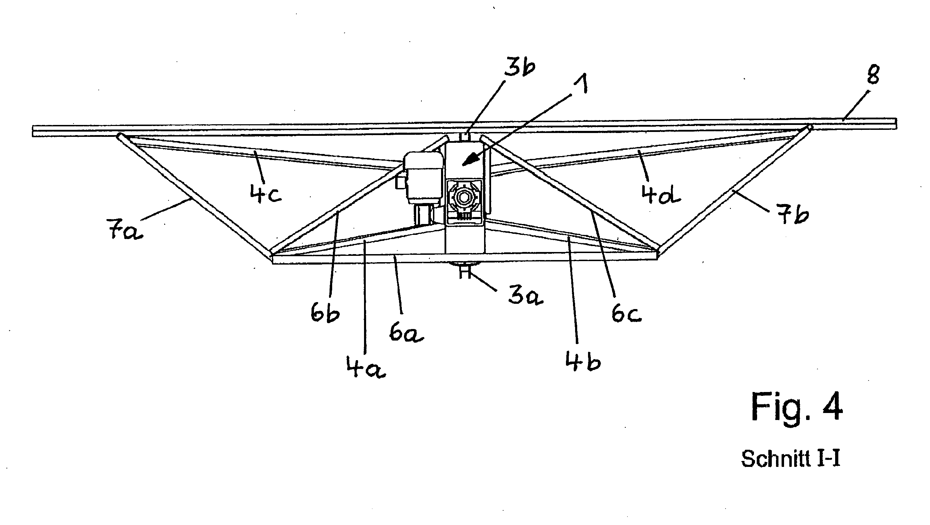

Das in den Figuren 1 - 4 dargestellte Lagergestell dient zum Abstützen von flächigen Solarpaneelen 12, welche auf einer Paneelhalterung aufruhen. Diese Paneelhalterung umfasst einen unteren Querholm 8 und einen oberen Querholm 9, die sich im montierten Zustand in gegenseitigem Abstand im wesentlichen waagerecht etwa über die gesamte Solarpaneelbreite erstrecken. Beide Querholme 8 und 9 sind durch mehrere Längsholme 10 aneinander befestigt, die im montierten Zustand in Richtung der Längserstreckung der Querholme 8 und 9 in gleichen Abständen aufeinander folgen. Die Paneelhalterung ist durch vier zusätzliche Verstärkungsstreben 11a - 11d verstärkt, von denen jeweils zwei Verstärkungsstreben 11a und 11b bzw. 11c und 11d über kreuz angeordnet sind, um jeweils ein Verstärkungskreuz zu bilden. Diese beiden Verstärkungskreuze liegen in Erstreckungsrichtung der Querholme 8, 9 in Abstand nebeneinander und sind mit ihren vier Endpunkten am oberen und unteren Querholm befestigt. Das Lagergestell weist ferner einen im wesentlichen vertikalen Stützmast 13 auf, der an seinem unteren Ende 13a an einer ortsfesten Verankerungsstelle 13b drehfest verankert ist. Dieser Stützmast stützt mit Hilfe einer Stützkonstruktion, die in Figur 1 insgesamt mit dem Bezugszeichen 14 bezeichnet ist, die bereits beschriebene Paneelhalterung ab, auf welcher die Solarpaneele 12 aufruhen. Die Stützkonstruktion 14 umfasst am oberen Mastende ein zentrales Abstützteil 1, an welchem drei im montierten Zustand in einer zur Mastachse im wesentlichen senkrechten Ebene liegende und in dieser Ebene ein Stützdreieck bildende Zentralstreben 6a - 6c befestigt sind. Die die Hypothenuse dieses Stützdreieckes bildende Zentralstrebe 6a, welche im montierten Zustand im wesentlichen parallel zu den Querholmen 8, 9 der Paneelhalterung verläuft, ist im wesentlichen mittig an der der Paneelhalterung abgewandten Rückseite des zentralen Abstützteiles 1 befestigt. Die beiden anderen, im wesentlichen gleich langen und die Seitenschenkel des Stützdreieckes bildenden Zentralstreben 6b und 6c sind mit ihren die Spitze des Stützdreieckes einschließenden Enden an der der Paneelhalterung zugewandten Vorderseite des zentralen Abstützteiles 1 befestigt. Zwischen den beiden Enden der die Hypothenuse des Stützdreieckes bildenden Zentralstrebe 6a und einer Abstützstelle am unteren Mastende 13a, die insgesamt mit dem Bezugszeichen 2 bezeichnet ist, verläuft jeweils eine Stützstrebe 4a bzw. 4b schräg nach unten. Ferner sind zwei weitere Stützstreben 3b und 3a vorgesehen, welche sich zwischen der Vorder- bzw. Rückseite des zentralen Abstützteiles 1 und der Abstützstelle 2 am unteren Mastende 13a erstrecken. Die vordere Stützstrebe 3b ist dabei mit ihrem oberen Ende am mittleren Bereich des unteren Querholmes 8 der Paneelhalterung befestigt und stützt auf diese Weise diesen Bereich ab. Die beiden seitlichen Endbereiche des Querholmes 8 sind durch zwei Zusatzstreben 4c und 4d abgestützt, welche in den betreffenden Endbereichen ebenfalls an dem unteren Querholm 8 befestigt sind und sich schräg nach unten zur Abstützstelle 2 am unteren Mastende 13a hin erstrecken. An beiden Befestigungsstellen dieser Zusatzstreben 4c und 4d mit dem unteren Querholm 8 der Paneelhalterung sind die Enden zweier Haltestreben 7a bzw. 7b befestigt, die sich von dieser jeweiligen Befestigungsstelle zum gegenüberliegenden Ende der die Hypothenuse des Stützdreieckes bildenden Zentralstrebe 6a hin erstrecken und mit diesen Enden fest verbunden sind. Diese beiden Haltestreben bilden zusammen mit den zur Abstützstelle 2 am unteren Mastende 13a hinlaufenden Streben der Stützkonstruktion 14 sowie den das Stützdreieck bildenden drei Zentralstreben und dem zentralen Abstützteil 1 eine Art Unterkonstruktion des Lagergestells, die besonders gut aus der Darstellung von Figur 4 hervorgeht. Alle diese Streben sind an ihren Enden fest verbunden, und zwar entweder miteinander oder am zentralen Abstützteil 1 oder an der gemeinsamen Abstützstelle 2 am unteren Mastende 13a.

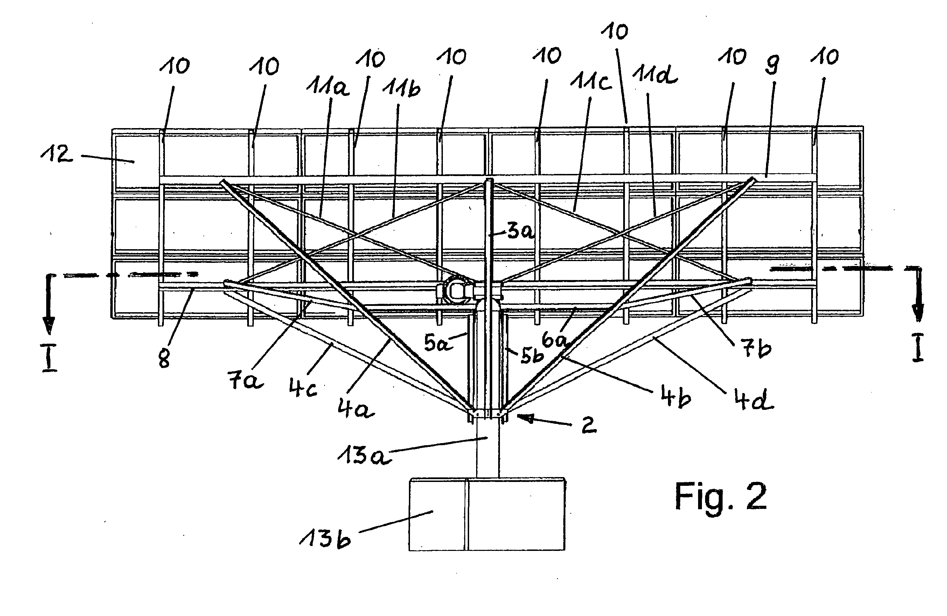

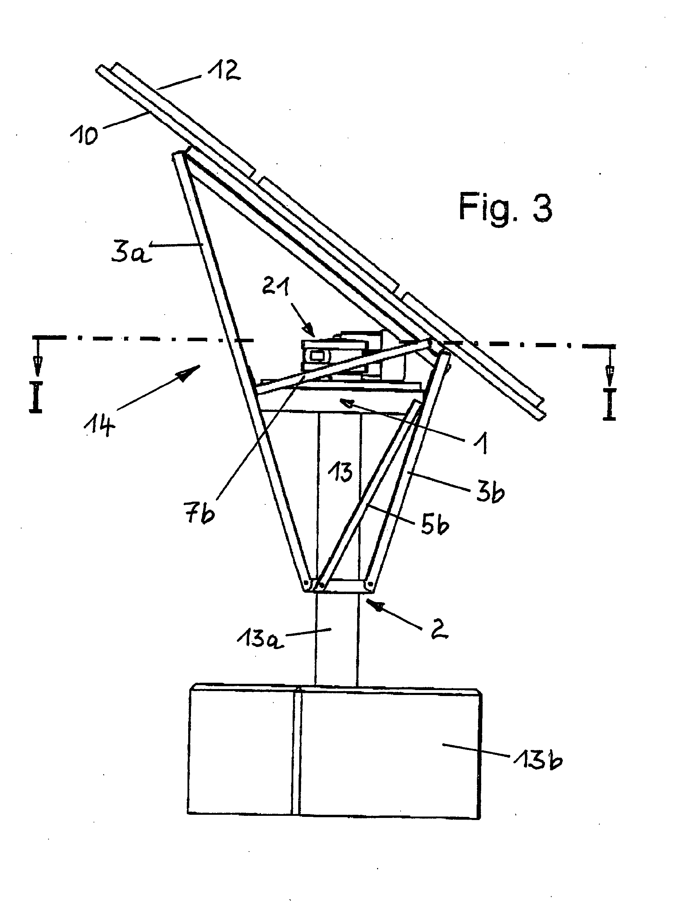

Wie aus Figuren 2 und 3 ersichtlich sind zur zusätzlichen Abstützung der Abstützstelle 2 am unteren Mastende 13a zwei Haltestreben 5a und 5b vorgesehen, die beidseitig des Mastes 13 zwischen dem zentralen Abstützteil 1 und der Abstützstelle 2 verlaufen und deren jeweilige Enden ebenfalls am Abstützteil 1 bzw. an der Abstützstelle 2 befestigt sind. Diese Haltestreben 5a und 5b, die der klareren Darstellung wegen in den Figuren 1 und 4 weggelassen sind, ergänzen die Unterkonstruktion und tragen zu deren weiterer Stabilität bei.

Die Stützkonstruktion 14 umfasst ferner zur weiteren Abstützung der Paneelhalterung mehrere Stützelemente, die zwischen dem oberen Querholm 9 und der die Hypothenuse des Stützdreieckes bildenden Zentralstrebe 6a verlaufen. Im Falle der in den Figuren 1 - 4 dargestellten Ausführungsform eines erfindungsgemäßen Lagergestells besitzen diese Stützelemente eine feste Länge und stellen über die im wesentlichen waagerechte Ebene des Stützdreieckes nach oben ragende geradlinige Verlängerungen derjenigen drei Stützstreben 4a, 4b und 3a dar, welche sich zwischen der die Hypothenuse des Stützdreieckes bildenden Zentralstrebe 6a und der Abstützstelle 2 am unteren Mastende 13a erstrecken. Diese drei Verlängerungen sind mit ihren Enden fest am oberen Querholm 9 der Paneelhalterung angebracht und stützen letztere in ihren beiden oberen seitlichen Bereichen und im oberen mittleren Bereich ab. Auf diese Weise ist der Elevationswinkel der Solarpaneele 12 fest eingestellt.

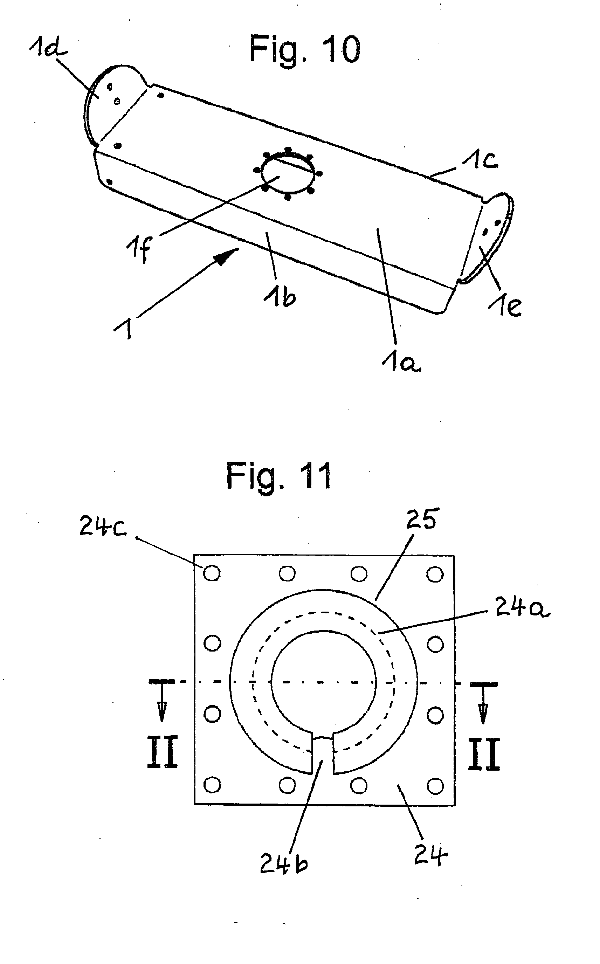

Wie insbesondere Figur 10 zeigt, umfasst das zentrale Abstützteil 1 der Stützkonstruktion 14 ein im wesentlichen rechteckiges plattenförmiges Basisteil 1a, an dessen vier Seitenränder mit dem Basisteil aus einem Stück bestehende Anschlussflansche 1b - 1e ausgebildet sind, welche gegenüber der Plattenebene abgewinkelt sind und zum Befestigen der Streben der Stützkonstruktion dienen. Da in sämtlichen Figuren die festen Verbindungen an der Stützkonstruktion 14 durch Schraubverbindungen 26 mit Schrauben, Muttern und Unterlegscheiben jeweils gleicher Größe realisiert werden, weist das zentrale Abstützteil 1, wie Figur 10 ebenfalls zeigt, entsprechende Bohrungen für diese Schraubverbindungen auf.

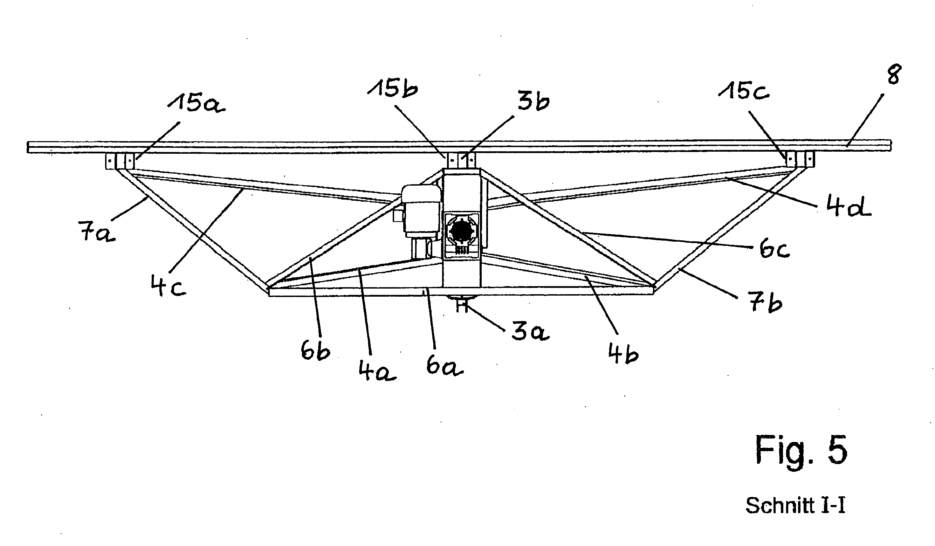

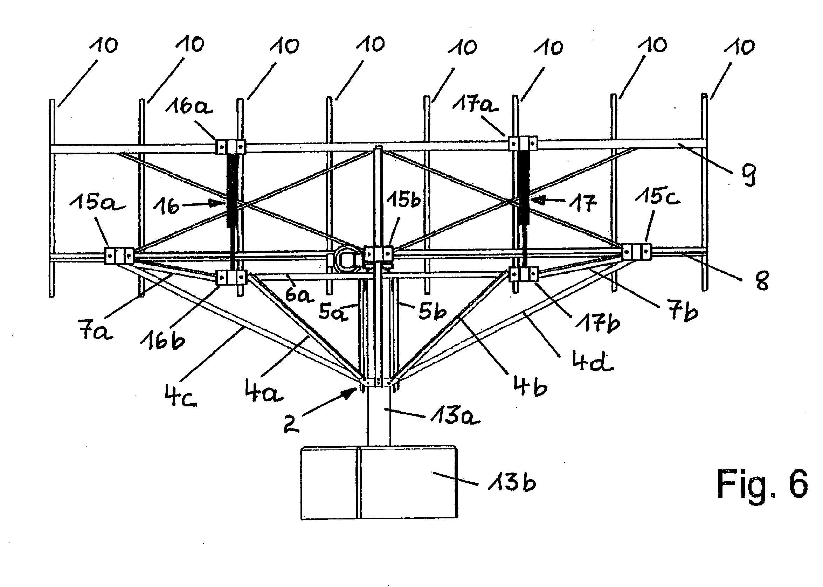

Zum Erreichen eines einstellbaren Elevationswinkels der Solarpaneele 12 sind gemäß der in den Figuren 5 und 6 gezeigten erfindungsgemäßen Ausführungsform die am unteren Querholm 8 der Paneelhalterung angreifenden Streben der Stützkonstruktion 14 an diesen Querholm bei 15a, 15b und 15c angelenkt. Ferner sind gemäß der Darstellung von Figur 6 zwei teleskopartig verlängerbare Stützelemente 16 und 17 vorgesehen, die mit ihren einen Enden 16b bzw. 17b an den beiden Enden der die Hypothenuse des Stützdreieckes bildenden Zentralstrebe 6a angelenkt sind. Die anderen Enden 16a bzw. 17a dieser beiden Stützelemente 16 und 17 sind mit dem oberen Querholm 9 der Paneelhalterung gelenkig verbunden, und zwar derart, dass jedes Stützelement im montierten Zustand und bei der Einstellung des Elevationswinkels in einer im wesentlichen vertikalen Ebene parallel zur Mastachse bewegbar ist.

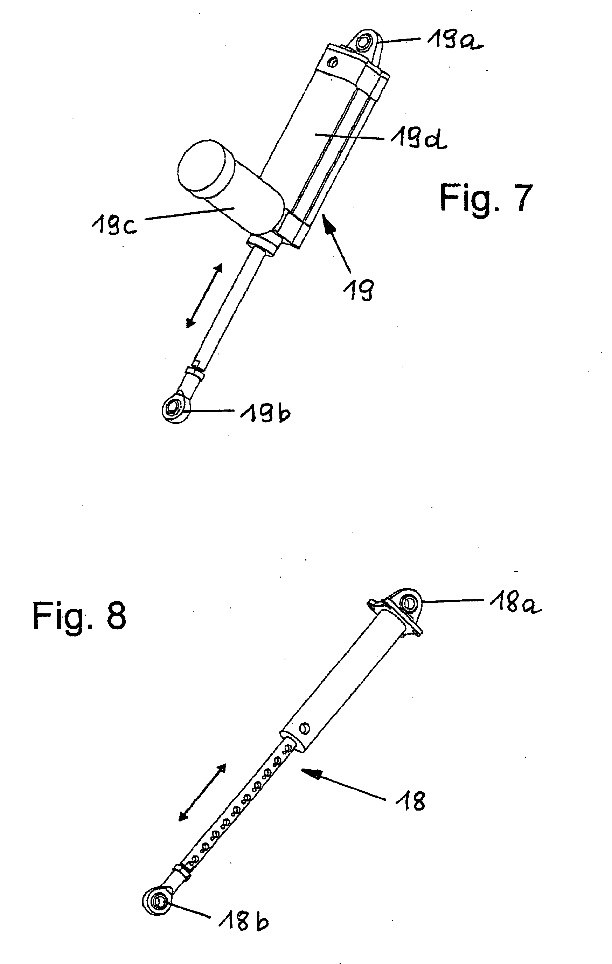

Gemäß der Darstellung von Figur 7 kann jedes der beiden Stützelemente 16 und 17 eine Baueinheit 19 aus jeweils einem Stellmotor 19c und einer mit dem Stellmotor in Wirkverbindung stehenden und durch denselben ausziehbaren rohrförmigen Teleskopanordnung 19d umfassen. Auf diese Weise kann der Elevationswinkel durch Motor eingestellt werden. Anlenkflansche 19a und 19b dienen zur Anlenkung an des Querholm 9 bzw. die Zentralstrebe 6a.

Im Gegensatz dazu ist es aber auch möglich, den Elevationswinkel manuell einzustellen, indem - wie in Figur 8 gezeigt - jedes der Abstützelemente 16 und 17 in Form einer manuell teleskopartig ausziehbaren und arretierbaren Abstützstrebe 18 ausgebildet ist. Die Arretierung wird hier durch nicht gezeigte Schraubbolzen realisiert, die durch entsprechende deckungsgleiche Bohrungen in den beiden Teilen der Abstützstrebe hindurchgeführt werden. Entsprechende Anlenkflansche tragen die Bezugszeichen 18a und 18b.

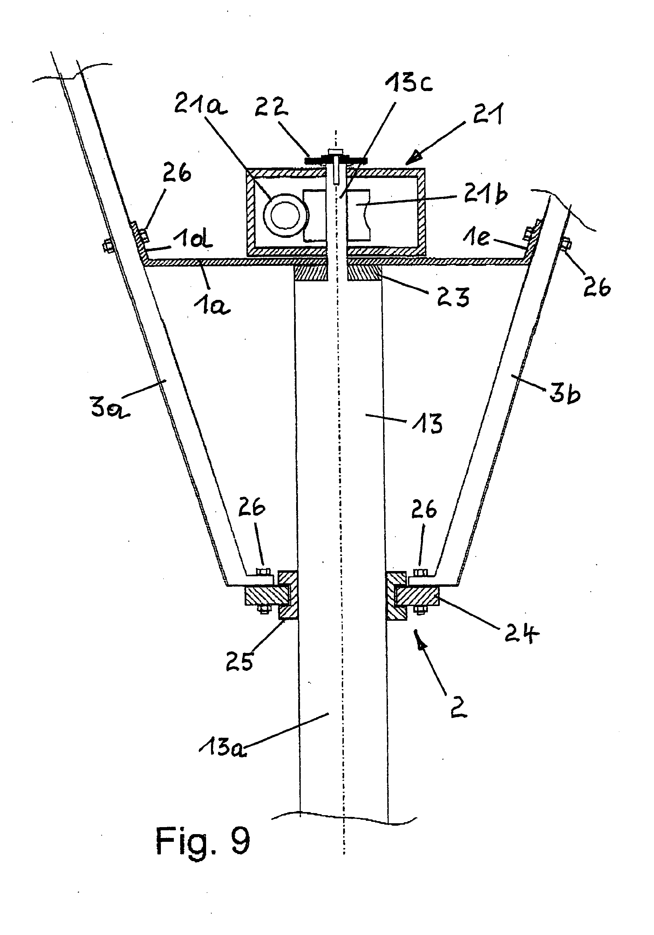

Um eine Azimut-Nachführung der Solarpaneele 12 zu erreichen, sind das zentrale Abstützteil 1 am oberen Mastende und die Abstützstelle 2 am unteren Mastende 13a axial frei drehbar am drehfest verankerten Stützmast 13 gelagert. Zu diesem Zweck weist das zentrale Abstützteil 1 eine zentrale Bohrung 1f (Figur 10) auf und ist, wie in Figur 9 dargestellt, mittels dieser Bohrung auf einen das obere Mastende bildenden Wellenzapfen 13c aufgeschoben. Das Drehlager für das aufgeschobene Abstützteil 1 bildet gemäß Figur 9 hier eine Kunststoffscheibe 23, weiche ebenfalls von dem Wellenzapfen 13c durchdrungen ist und die auf einem radialen Absatz zwischen dem Wellenzapfen 13c und dem Außenumfang des Stützmastes 13 aufsitzt. Am Wellenzapfen 13c ist ferner ein Zahnrad 21 b drehfest verankert, welches mit der Antriebsschnecke 21a eines insgesamt in Figur 9 mit dem Bezugszeichen 21 bezeichneten Schneckentriebes kämmt. Dieser Schneckentrieb ist fest mit dem zentralen Abstützteil 1 verbunden, sodass beim Drehen der Antriebsschnecke 21a dieser Schneckentrieb gemeinsam mit dem damit fest verbundenen zentralen Abstützteil 1 sowie der am Abstützteil festgehaltenen Stützkonstruktion 14 eine Drehbewegung um das Zahnrad 21b ausführt. Auf diese Weise werden die von der Stützkonstruktion 14 abgestützten Solarpaneele 12 in Azimut-Richtung nachgeführt. Ein am oberen Ende des Wellenzapfens 13c angebrachter Halteflansch 22 verhindert ein Abheben des am zentralen Abstützteile 1 angebrachten Schneckentriebes 21 von der das Drehlager dieses Abstützteiles bildenden Kunststoffscheibe 23.

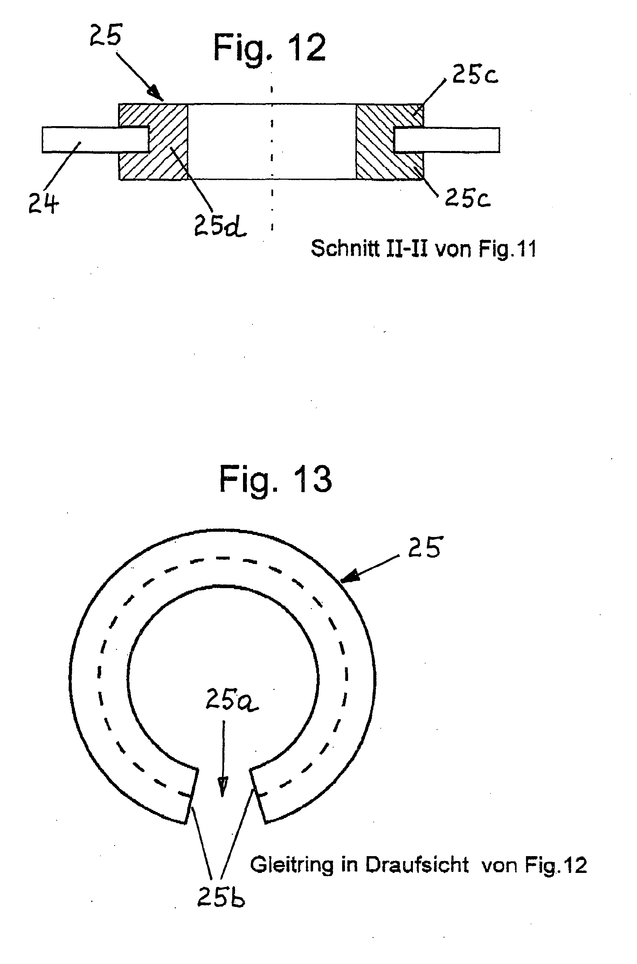

Wie ferner Figur 9 in Verbindung mit den Figuren 11-13 zeigt, ist die gegenüber dem Stützmast 13 drehbare Abstützstelle 2 als plattenförmiges Flanschteil 24 mit einer zentralen Bohrung 24a ausgeführt, die das untere Stützmastende 13a aufnimmt und umfangsseitig mit radialem Abstand umschließt. Dieser freie Abstand wird von einem auf den Rand der Bohrung 24a aufgeschobenen und als Drehlager für das Flanschteil 24 dienenden Lagerring 25 aus gleitfähigem Kunststoff ausgefüllt. Zu diesem Zweck weist der Lagerring 25 einen U-förmigen Querschnitt auf mit einer im wesentlichen der Dicke des plattenförmigen Flanschteiles 24 entsprechenden Innenweite zwischen den beiden Schenkeln 25c dieses Lagerringes. Die von den freien Schenkelenden abgegrenzte Öffnung liegt am Ring-Außenumfang, sodass sich bei aufgeschobenem Lagerring 25 dessen beide Schenkel beidseitig der Seitenränder der zentralen Bohrung 24a erstrecken. Das die unteren Schenkelenden verbindende Jochteil 25d (Figur 12) des Lagerringes 25 füllt auf diese Weise den Raum zwischen Innenrand der zentralen Bohrung 24a und Außenumfang des Stützmastes 13 aus.

Damit bei der Drehbewegung des plattenförmigen Flanschteiles 24 der Lagerring 25 mitdreht, springt vom Innenrand der zentralen Bohrung 24a in im wesentlichen radialer Richtung eine in der Ebene des plattenförmigen Flanschteiles 24 liegende Nase 24b nach innen vor. Die radiale Länge dieser Nase ist dabei so bemessen, dass diese Länge höchstens gleich dem radialen Abstand zwischen Mastaußenumfang und Innenrand der zentralen Bohrung 24a entspricht. Wegen dieser Nase 24b ist das Material des Lagerringes 25 segmentartig bei 25a (Figur 13) über eine Umfangslänge weggeschnitten, die in Umfangsrichtung gesehen im wesentlichen der Breite der vorspringenden Nase 24b entspricht. Auf diese Weise kann der auf den Bohrungsrand aufgeschobene Lagerring 25 durch die Nase drehfest gehalten werden, indem die das weggeschnittene Segment begrenzenden Stirnflächen 25b des Lagerringes 25 an den Seitenkanten dieser Nase anliegen.

Wie ferner die Figuren 9 und 11 zeigen, weisen die vom Außenumfang des Stützmastes 13 abstehenden Randbereiche des plattenförmigen Flanschteiles 24 Bohrungen 24c auf, die dazu dienen, die nach unten laufenden Streben der Stützkonstruktion 14 mittels der Schraubverbindungen 24 am Flanschteil zu befestigen.

Sollte der Lagerring 25 einmal ausgewechselt werden müssen, wird ein schneller und bequemer Ringaustausch vorzugsweise dann gewährleistet, wenn das plattenförmige Flanschteil 24 zweiteilig ausgebildet ist und aus zwei hier nicht dargestellten aneinander befestigbaren Halbschalen besteht, die auf den Außenumfang des Stützmastes 13 aufsetzbar und miteinander fest verbindbar sind.

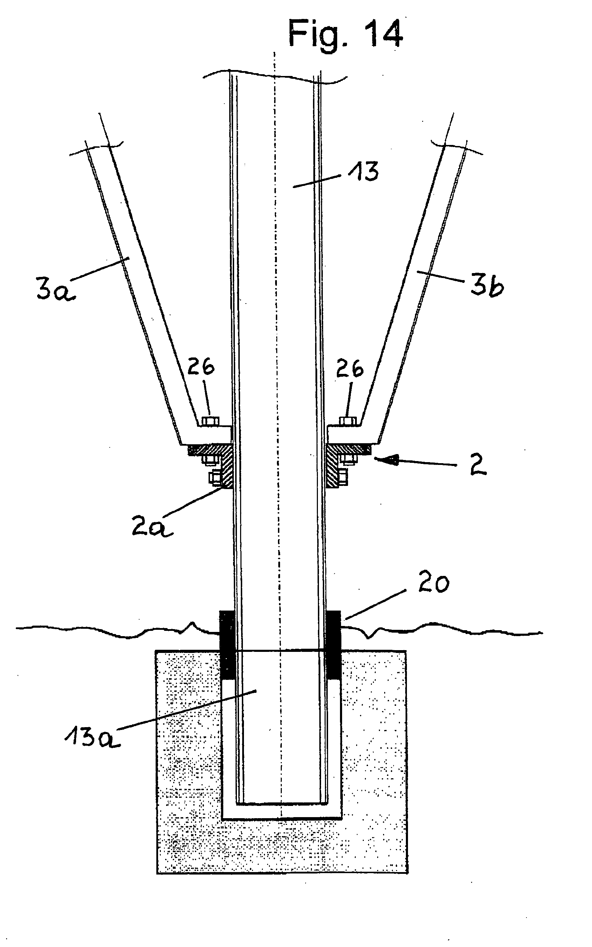

Während bei den bisher abgehandelten Ausführungsformen der Stützmast 13 drehfest gehalten ist und zur Azimut-Nachführung demgegenüber die Stützkonstruktion 14 gemeinsam mit dem zentralen Abstützteil 1 und der Abstützstelle 2 am unteren Mastende 13a gedreht wird, kann auch alternativ dazu der Stützmast 13 selbst drehbar gelagert sein. In diesem Fall ist zur Realisierung der Azimut-Nachführung die Stützkonstruktion 14 mit dem zentralen Abstützteil 1 und der unteren Abstützstelle 2 drehfest mit dem Stützmast zu verbinden. Für die untere Abstützstelle 2 ist dieser Umstand schematisch in Figur 14 dargestellt, in der das untere Mastende 13a in einer Drehlagerung 20 drehbar gehalten ist. Die Abstützstelle 2 ist hier ebenfalls als Flanschteil ausgebildet, der aber im Gegensatz zu den weiter oben abgehandelten Ausführungsformen hier über einen axialen Kragen 2a und eine Schraubverbindung fest mit dem Stützmast verbunden ist. Auch in diesem Fall sind die nach unten laufenden Streben der Stützkonstruktion 14 durch entsprechende Schraubverbindungen 26 mit dem die Abstützstelle 2 bildenden Flanschteil verbunden.

Es sei noch abschließend bemerkt, dass als Material für die Stützkonstruktion 14 verzinktes Eisen, Hartaluminium und/oder Edelstahl verwendet werden kann. Aber auch andere, dafür geeignete Materialien können gegebenenfalls eingesetzt werden.

## Patentansprüche

1. Lagergestell zum Abstützen von flächigen Solarpaneelen (12), mit einem in seiner montierten Stellung im wesentlichen vertikalen und an seinem unteren Ende (13a) im Erdboden oder an einer ortsfesten Verankerungsstelle (13b) gelagerten Stützmast (13), an dem die auf einer ebenen Paneelhalterung (8-11) aufruhenden Solarpaneele (12) mittels einer Stützkonstruktion (14) gehalten und zur Azimut-Nachführung um die Mastachse drehbar sind, **dadurch gekennzeichnet, dass** die Stützkonstruktion (14) am oberen Mastende ein zentrales Abstützteil (1) umfasst, an dem drei im montierten Zustand in einer zur Mastachse im wesentlichen senkrechten Ebene liegende und in dieser Ebene ein Stützdreieck bildende Zentralstreben (6a-6c) befestigt sind, von denen die die Hypothenuse dieses Stützdreieckes bildende und im montierten Zustand im wesentlichen parallel zur Ebene der Paneelhalterung (8-11) verlaufende Zentralstrebe (6a) im wesentlichen mittig an der der Paneelhalterung (8-11)abgewandten Rückseite des zentralen Abstützteiles (1) befestigt ist, während die beiden anderen, im wesentlichen gleichlangen und die Seitenschenkel des Stützdreieckes bildenden Zentralstreben (6b und 6c) mit ihren die Spitze des Stützdreieckes einschließenden Enden an der der Paneelhalterung zugewandten Vorderseite des zentralen Abstützteiles (1) befestigt sind, dass zwischen den beiden Enden der die Hypothenuse des Stützdreieckes bildenden Zentralstrebe (6a) und einer Abstützstelle (2) am unteren Mastende jeweils eine Stützstrebe (4a und 4b) schräg nach unten verläuft, die durch zwei weitere Stützstreben (3b und 3a) ergänzt sind, welche sich zwischen der Vorder- bzw. Rückseite des zentralen Abstützteiles (1) und der Abstützstelle (2) am unteren Mastende (13a) erstrecken und von denen die vordere Stützstrebe (3b) mit ihrem oberen Ende eine Abstützung für den unteren mittleren rückseitigen Bereich der Paneelhalterung (8-11) bildet, während zwei untere seitliche Bereiche an der Rückseite der Paneelhalterung durch zwei Zusatzstreben (4c und 4d) abgestützt sind, welche sich von diesen beiden Bereichen schräg nach unten zur Abstützstelle (2) am unteren Mastende (13a) hinerstrecken und von denen jede Zusatzstrebe mit einer Haltestrebe (7a und 7b) zusammenarbeitet, die jeweils zwischen dem betreffenden seitlichen Bereich an der Rückseite der Paneelhalterung (8-11) und dem gegenüberliegenden Ende der die Hypothenuse des Stützdreieckes bildenden Zentralstrebe (6a) verläuft, und dass zur weiteren Abstützung der Paneelhalterung (8 - 11) mehrere Stützelemente vorgesehen sind, die zwischen dem oberen rückseitigen Bereich der Paneelhalterung und der die Hypothenuse des Stützdreieckes bildenden Zentralsstrebe (6a) verlaufen.

2. Lagergestell nach Anspruch 1, **dadurch gekennzeichnet, dass** zum Erreichen eines fest eingestellten Elevationswinkels der auf der Paneelhalterung (8 - 11) aufruhenden Solarpaneele (12) die Stützelemente eine feste Länge besitzen und an ihrem einen Ende mit der die Hypothenuse des Stützdreieckes bildenden Zentralstrebe (6a) bzw. an ihrem anderen Ende mit dem oberen rückseitigen Bereich der Paneelhalterung (8 - 11) verbunden sind.

3. Lagergestell nach Anspruch 2, **dadurch gekennzeichnet, dass** auch die an den beiden unteren seitlichen Bereichen und dem unteren mittleren Bereich der Paneelhalterung (8 - 11) angreifenden Zusatz-, Halte- und Stütz-Streben (4c, 4d-, 7a, 7b; 3b) der Stützkonstruktion (14) mit der Paneelhalterung fest verbunden sind.

4. Lagergestell nach Anspruch 2 oder 3, **dadurch gekennzeichnet, dass** die Stützelemente mit fester Länge im montierten Zustand über die im wesentlichen waagerechte Ebene des Stützdreieckes nach oben ragende geradlinige Verlängerungen derjenigen drei Stützstreben (4a, 4b, 3a) sind, welche sich zwischen der die Hypothenuse des Stützdreieckes bildenden Zentralstrebe (6a) und der Abstützstelle (2) am unteren Mastende (13a) erstrecken.

5. Lagergestell nach Anspruch 1, **dadurch gekennzeichnet, dass** zum Erreichen eines einstellbaren Elevationswinkels der auf der Paneelhalterung (8 - 11) aufruhenden Solarpaneele (12) die an den beiden unteren seitlichen Bereichen und dem unteren mittleren Bereich der Paneelhalterung angreifenden Zusatz-, Halte- und Stütz-Streben (4c, 4d-; 7a, 7b; 3b) der Stützkonstruktion (14) gelenkig (bei 15a - 15c) mit diesen Bereichen verbunden sind, und dass die Stützelemente (16, 17), die in diesem Fall mit ihren beiden Enden am oberen rückseitigen Bereich der Paneelhalterung bzw. an der die Hypothenuse des Stützdreieckes bildenden Zentralstrebe anlenkbar (bei 16a, 16b bzw. 17a, 17b) sind, längenmäßig manuell oder durch Stellmotor teleskopartig verlängerbar und in der jeweils gewünschten Länge von Hand bzw. durch den Stellmotor arretierbar sind.

6. Lagergestell nach Anspruch 5, **dadurch gekennzeichnet, dass** insgesamt wenigstens zwei teleskopartig verlängerbare Stützelemente (16 und 17) vorgesehen sind, die mit ihren einen Enden (16b bzw. 17b) an den beiden Enden der die Hypothenuse des Stützdreieckes bildenden Zentralstrebe (6a) und mit ihren anderen Enden (16a bzw. 17a) derart am oberen rückseitigen Bereich der Paneelhalterung (8 - 11) angelenkt sind, dass jedes Stützelement im montierten Zustand und bei der Einstellung des Elevationswinkels in einer im wesentlichen vertikalen Ebene parallel zur Mastachse bewegbar ist.

7. Lagergestell nach Anspruch 6 mit einem manuell einstellbaren Elevationswinkel, **dadurch gekennzeichnet, dass** jedes der Abstützelemente (16 und 17) in Form einer manuell teleskopartig ausziehbaren und arretierbaren Abstützstrebe (18) ausgebildet ist.

8. Lagergestell nach Anspruch 6 mit einem durch Stellmotor einstellbaren Elevationswinkel, **dadurch gekennzeichnet, dass** jedes der Stützelemente (16 und 17) eine Baueinheit (19) aus jeweils einem Stellmotor (19c) und einer mit dem Stellmotor in Wirkverbindung stehenden und durch denselben ausziehbaren rohrförmigen Teleskopanordnung (19d) umfasst.

9. Lagergestell nach einem oder mehreren der Ansprüche 1 - 8, dessen Paneelhalterung zum Abstützen der oberen und unteren rückseitigen Bereiche einen oberen (9) und einen unteren Querholm (8) umfasst, die sich im montierten Zustand in gegenseitigem Abstand im wesentlichen waagerecht etwa über die gesamte Solarpaneelbreite erstrecken und mit denen die Streben und Stützelemente der Stützkonstruktion (14) verbunden sind, wobei diese beiden Querholme (8 und 9) durch mehrere Längsholme (10) aneinander befestigt sind, die im montierten Zustand in Richtung der Längserstreckung der Querholme (8 und 9) in Abständen aufeinanderfolgen, **dadurch gekennzeichnet, dass** die Paneelhalterung (8 -11) durch vier zusätzliche Verstärkungsstreben (11a- 11d ) verstärkt ist, von denen jeweils zwei Verstärkungsstreben (11a und 11b bzw. 11 c und 11d) zur Bildung eines Verstärkungskreuzes über Kreuz angeordnet sind, wobei die beiden Verstärkungskreuze im montierten Zustand in Erstreckungsrichtung der Querholme (8, 9) in Abstand nebeneinander liegen und mit ihren vier Endpunkten am oberen und unteren Querholm befestigt sind.

10. Lagergestell nach einem oder mehreren der Ansprüche 1 - 9 **dadurch gekennzeichnet, dass** zur Realisierung der Azimutnachführung der Solarpaneele (12) der Stützmast (13) an seinem unteren Ende (13a) axial drehbar (bei 20) verankert und an seinem oberen Mastende verbunden mit dem zentralen Abstützteil (1) fest verbunden ist, und dass auch die Abstützstelle (2 in Figur 14) am unteren Mastende drehfest am Stützmast (13) verankert ist.

11. Lagergestell nach Anspruch 10, **dadurch gekennzeichnet, dass** das die Abstützstelle (2) am unteren Mastende (13a) durch einen am Stützmast (13) fest anbringbaren Anschlussflansch (2a) gebildet ist, an welchem die nach unten laufenden Streben der Stützkonstruktion (14) mit ihren unteren Enden befestigt sind

12. Lagergestell nach einem oder mehreren der Ansprüche 1 - 9, **dadurch gekennzeichnet, dass** zur Realisierung der Azimutnachführung der Solarpaneele der Stützmast (13) an seinem unteren Ende drehfest verankert ist, während das zentrale Abstützteil (1) am oberen Mastende und die Abstützstelle (2 in Figur 9) am unteren Mastende axial frei drehbar am Stützmast (13) gelagert sind.

13. Lagergestell nach Anspruch 12, **dadurch gekennzeichnet, dass** als Antriebsorgan für die Azimutnachführung der Solarpaneele ein mit dem zentralen Abstützteil (1) fest verbindbarer Schneckentrieb (21 in Figur 9) vorgesehen ist, dessen Antriebsschnecke (21a) im montierten Zustand mit der umfangsseitigen Außenverzahnung eines drehfest axial am oberen Ende des Stützmastes (13) verankerten Zahnrades (21b) kämmt.

14. Lagergestell nach Anspruch 12 oder 13, **dadurch gekennzeichnet, dass** zur zusätzlichen Abstützung der Abstützstelle (2) am unteren Mastende (13a) zwei beidseitig des Mastes (13) zwischen dem zentralen Abstützteil (1) und der Abstützstelle (2) verlaufende Haltestreben (5a und 5b) vorgesehen sind, deren jeweilige Enden an dem zentralen Abstützteil (1) bzw. an der Abstützstelle (2) befestigt sind.

15. Lagergestell nach einem oder mehreren der Ansprüche 12 - 14, **dadurch gekennzeichnet, dass** die Abstützstelle (2) am unteren Mastende (13a) als plattenförmiges Flanschteil (24) mit einer zentralen Bohrung (24a) ausgeführt ist, die im montierten Zustand das untere Mastende (13a) bei freier Drehbarkeit des Flanschteiles (24) aufnimmt, wobei die an diesem Flanschteil (24) zusammenlaufenden unteren Enden der Streben der Stützkonstruktion (14) an den vom Außenumfang des Stützmastes (13) abstehenden Randbereichen des plattenförmigen Flanschteiles befestigt sind.

16. Lagergestell nach Anspruch 15, **dadurch gekennzeichnet, dass** die zentrale Bohrung (24a) des plattenförmigen Flanschteiles (24) den aufgenommenen Stützmast (13) umfangsseitig mit radialem Abstand umschließt, der von einem auf den Rand der Bohrung (24a) aufgeschobenen und als Drehlager für das Flanschteil dienenden Lagerring (25) aus gleitfähigem Material ausgefüllt ist.

17. Lagergestell nach Anspruche 16, **dadurch gekennzeichnet, dass** vom Innenrand der zentralen Bohrung (24a) in im wesentlichen radialer Richtung eine in der Ebene des plattenförmigen Flanschteiles (24) liegende Nase (24b) nach innen vorspringt, deren radiale Länge höchstens gleich dem radialen Abstand zwischen Mastaußenumfang und Innenrand der zentralen Bohrung (24a) ist, und dass das Material des Lagerringes (25) segmentartig (bei 25a) über eine Umfangslänge weggeschnitten ist, die in Umfangsrichtung gesehen im wesentlichen der Breite der vorspringenden Nase (24b) entspricht, sodass der auf dem Bohrungsrand aufgeschobene Lagerring (25) durch die Nase, an der die das weggeschnittene Segment begrenzenden Stirnflächen (25b) des Lagerringes (25) anliegen, drehfest gehalten ist.

18. Lagergestell nach Anspruch 16 oder 17, **dadurch gekennzeichnet, dass** der Lagerring (25) einen U-förmigen Querschnitt besitzt mit einer im wesentlichen der Dicke des plattenförmigen Flanschteiles (24) entsprechenden Innenweite zwischen den beiden Schenkeln (25c) des Lagerringes (25), und dass die von den freien Schenkelenden abgegrenzte Öffnung am Ringaußenumfang liegt, sodass sich bei aufgeschobenem Lagerring (25) dessen beide Schenkel beidseitig der Seitenränder der zentralen Bohrung (24a) erstrecken, während das die unteren Schenkelenden verbindende Jochteil (25d) des Lagerringes (25) den Raum zwischen Innenrand der zentralen Bohrung (24a) und Außenumfang des Stützmastes (13) ausfüllt.

19. Lagergestell nach einem oder mehreren der Ansprüche 16 -18, **dadurch gekennzeichnet, dass** der Lagerring (25) aus vorzugsweise federndem Kunststoff besteht.

20. Lagergestell nach einem oder mehreren der Ansprüche 15 - 19, **dadurch gekennzeichnet, dass** das plattenförmige Flanschteil (24) aus zwei aneinander befestigten Halbschalen besteht, die auf den Außenumfang des Stützmastes (13) aufgesetzt und vorzugsweise miteinander verschraubt sind.

21. Lagergestell nach einem oder mehreren der Ansprüche 1 - 20, **dadurch gekennzeichnet, dass** das zentrale Abstützteil (1) ein auf dem oberen Ende des Stützmastes (13) gelagertes plattenförmiges Basisteil (1a in Figur 10) umfasst, das an seinen Seitenrändern vorzugsweise mit dem Basisteil (1a) aus einem Stück bestehende und gegenüber der Plattenebene abgewinkelte Anschlussflansche (1b - 1e) zum Befestigen der Streben der Stützkonstruktion (14) aufweist.

22. Lagergestell nach Anspruch 21, **gekennzeichnet durch** ein im wesentlichen rechteckiges Basisteil (1a), wobei an jedem der vier Seitenränder des Basisteiles ein abgewinkelter Anschlussflansch (1b - 1e) vorgesehen ist.

23. Lagergestell nach einem oder mehreren der Ansprüche 1 - 22, **dadurch gekennzeichnet, dass** als Material für die Stützkonstruktion (14) verzinktes Eisen, Hartaluminium und/oder Edelstahl vorgesehen ist.

24. Lagergestell nach einem oder mehreren der Ansprüche 1 - 23, **gekennzeichnet durch** eine **durch** Schraub- (26 in Figur 9) und/oder Schweiß-Verbindungen zusammen gehaltene Stützkonstruktion (14).

25. Lagergestell nach Anspruch 24, **dadurch gekennzeichnet, dass** für sämtliche Schraubverbindungen Schrauben, Muttern und gegebenenfalls Unterlegscheiben jeweils gleicher Größe vorgesehen sind.

## Claims

1. Cadre porteur pour supporter des panneaux solaires (12), comprenant un poteau de support (13) substantiellement vertical à l'etat monté et encastré avec son extrémité inférieure (13a) dans le sol ou monté dans un point d'ancrage (13b) immeuble, auquel les panneaux solaires (12), restant sur un support de panneau (8-11) plan avec une région inférieure et une région supérieure, sont tenus par une structure d'appui (14) qui appuie du revers le support de panneau et auquel poteau les panneaux solaires sont pivotants pour suivre l'azimut,
**caractérisé en ce que**
la structure d'appui (14) comprend à l'extrémité supérieure du poteau un élément de support central (1) auquel trois potences centrales (6a-6c), positionnées à l'etat monté dans une plaine substantiellement verticale à l'axe du poteau et formant dans cette plaine un triangle d'appui, sont attachées desquels la potence centrale (6a), formant l'hypoténuse du ce triangle d'appui et s'étendant à l'état monté substantiellement parallèle à la plaine du support de panneau (8-11), est attachée substantiellement centralement au derrière de support central (1) détourné du support de panneau (8-11), tandis que les deux autres potences centrales (6b et 6c), substantiellement également longues et formant les cotés du triangle d'appui, sont attachées avec leurs extrémités, cernant la pointe du triangle d'appui, au devant d' élément du support central (1) tourné au support de panneau, qu'entre les deux extrémités de la potence centrale (6a) formant l'hypoténuse du triangle d'appui et un point d'appui (2) à l'extrémité inferieure du poteau respectivement une potence de support (4a et 4b) s'étend biaisement vers le bas qui sont complétées par deux autres potences de support (3b et 3a) qui s'étendent entre le devant et le derriere d'élément de support central (1) et du point d'appui (2) à l'extrémité inférieure du poteau (13a) et desquelles la potence de support (3b) antérieure forme avec son extrémité supérieure un support pour la région derrière inférieure centrale du support de panneau (8-11), tandis que deux régions inférieures latérales au derrière du support de panneau sont supportées par deux potences subsidiaires (4c et 4d) qui sont attachées aux regions correspondantes et s'étendent de ces deux régions biaisement vers le bas vers le point d'appui (2) à l'extrémité inférieure du poteau (13a), dans lequel aux points d'attache de ces potences subsidiaires (4c et 4d) les extrémités de deux potences de tenue (7a et 7b) sont attachées qui s'étendent respectivement entre la région correspondante au derrière du support de panneau (8-11) et l'extrémité opposée de la potence centrale (6a) formant l'hypoténuse du triangle d'appui et sont rigidement attachées à leurs extrémités et que pour autre support de support de panneau (8-11) plusieurs éléments de support sont pourvus qui sont montés à la région derrière supérieure du support de panneau et s'étendent entre la région derrière supérieure du support de panneau et la potence centrale (6a) formant l'hypoténuse du triangle d'appui.

2. Cadre porteur selon la revendication 1,
**caractérisé en ce que**,
pour arriver à un angle de site fixement ajusté des panneaux solaires (12) restant sur le support de panneau (8-11), les éléments de support ont une longueur fixe et sont rigidement connectés avec un de leurs extrémités à la potence centrale (6a) formant l'hypoténuse du triangle d'appui ou avec leur autre extrémité à la region derrière supérieure du support de panneau (8-11).

3. Cadre porteur selon la revendication 2,
**caractérisé en ce que**
les potences subsidiaires, potences de tenue et potences de support (4c, 4d-, 7a, 7b, 3b) de la structure d'appui (14) qui engagent les deux regions inférieures latérales et la région inférieure centrale du support de panneau (8-11) sont rigidement attachées au support de panneau aussi.

4. Cadre porteur selon la revendication 2 ou 3,
**caractérisé en ce que**
à l'état monté, par la plaine substantiellement horizontale du triangle d'appui, les éléments de support avec une longueur fixe sont des allongements rectilignes s'élançant vers l'haute de ces trois potences de support (4a, 4b, 3a) qui s'étendent entre la potence centrale (6a) formant l'hypoténuse de triangle d'appui et le point d'appui (2) à l'extrémité inférieure (13a) du poteau.

5. Cadre porteur selon la revendication 1,
**caractérisé en ce que**,
pour arriver à un angle de site ajustable des panneaux solaires (12) restant sur le support de panneau (8-11), les potences subsidiaires, les potences de tenue et les potences de support (4c, 4d-, 7a, 7b, 3b) de la structure d'appui (14), qui engagent les deux régions inférieures latérales et la région inférieure centrale du support de panneau sont articulément connectées à ces régions et que les éléments de support (16, 17) qui dans ce cas sont articulement connectables avec leur deux extrémités à la région supérieure derrière du support de panneau et à la potence centrale formant l'hypoténuse du triangle d'appui (16a, 16b ou 17a, 17b), peuvent être longitudinalement allongés de manière télescopique manuellement ou par un servomoteur et peuvent être arrêtés dans la position respectivement désirée manuellement ou par le servomoteur.

6. Cadre porteur selon la revendication 5,
**caractérisé en ce qu'**
en tout au moins deux elements de support (16 et 17) manuellement allongeables de manière télescopique sont pourvus qui sont articulement connectés avec une de leurs extrémités (16b et 17b) à les deux extrémités de la potence centrale (6a) formant l'hypoténuse du triangle d'appui et avec leurs autres extrémités (16a ou 17a) à la région supérieure derrière du support de panneau (8-11), de façon qu'à l'état monté et pendant ajuster l'angle de site chaque élement de support est mobile dans une plaine substantiellement verticale parallèlement à l'axe du poteau.

7. Cadre porteur selon la revendication 6 avec un angle de site manuellement ajustable,
**caractérisé en ce que**
chaque élément de support (16 et 17) est formé en forme d'une potence de support (18) manuellement allongeable de manière télescopique et blocable.

8. Cadre porteur selon la revendication 6 avec un angle de site ajustable par servomoteur,
**caractérisé en ce que**
chaque élément de support (16 et 17) comprend une unité physique (19) respectivement d'un servomoteur (19c) et d'un arrangement télescopique en forme d'un tube étant en liaison fonctionnelle avec le servomoteur et allongeable par le même.

9. Cadre porteur selon une quelconque des revendications 1 à 8,
**caractérisé en ce que**,
pour supporter les régions supérieures et inférieures derrières, son support de panneau comprend une traverse supérieure (9) et une traverse inférieure (8) qui à l'état monté s'etendent substantiellement horizontale par environ la largeur entière du panneau solaire en une distance mutuelle et auxquelles les potences et les éléments de support de la structure d'appui (14) sont connectés, dans lequel ces deux traverses (8 et 9) sont attachées l'une à l'autre par plusieurs longerons (10) qui à l'état monté sont espacés entre eux dans la direction de l'extension longitudinale des traverses (8 et 9) et que le support de panneau (8-11) est renforcé par quatre potences de renforcement (11a-11d) additionnelles, desquelles deux potences de renforcement sont respectivement disposées croisées (11a et 11b, 11c et 11d) pour former une croix de renforcement, dans lequel à l'état monté les deux croix de renforcement sont disposées espacées côté à côté dans la direction d'extension des traverses (8, 9) et attachées avec leurs quatre points d'extrémité à la traverse supérieure et inférieure.

10. Cadre porteur selon l'une quelconques des revendications 1 à 9,
**caractérisé en ce que**,
pour réaliser le suivi d'azimut des panneaux solaires (12), le poteau de support (13) est ancré axialement rotatif (chez 20) à son extrémité inférieure (13a) et connecté rigidement avec son extrémité supérieure au support central (1) et qu'aussi le point d'appui (2) à l'extrémité inférieure du poteau est ancré de manière non-rotative au poteau de support (13).

11. Cadre porteur selon la revendication 10,
**caractérisé en ce que**
le point d'appui (2) à l'extrémité inférieure (13a) du poteau est formé par une bride rigidement attachable au poteau de support (13), à laquelle les potences de la structure d'appui (14) étendant vers le bas sont attachées avec leurs extrémités inférieures.

12. Cadre porteur selon l'une quelconque des revendications 1 à 9,
**caractérisé en ce que**,
pour réaliser le suivi d'azimut des panneaux solaires, le poteau de support (13) est ancré de manière non-rotative à son extrémité inférieure tandis que le support central (1) à l'extrémité supérieure et le point d'appui (2) à l'extrémité inférieure sont montés de manière librement axialement rotative au poteau de support (13).

13. Cadre porteur selon la revendication 12,
**caractérisé en ce que**
comme composant d'entraînement pour le suivi d'azimut des panneaux solaires une transmission à vis sans fin (21) rigidement connectable au support central (1) est pourvu, dont la vis sans fin (21a) s'engrène à l'état monté dans la denture externe circonferentielle d'une roue dentée étant ancrée de manière axialement non-rotative à l'extrémité supérieure du poteau de support (13).

14. Cadre porteur selon la revendication 12 ou 13,
**caractérisé en ce que**
pour le support subsidiaire du point d'appui (2) à l'extrémité inférieure (13a) du poteau deux potences d'appui (5a et 5b) s'étendant aux deux côtés du poteau (13) entre le support central (1) et le point d'appui (2) sont pourvu dont les extrémités respectives sont attachées au support central (1) et au point d'appui (2).

15. Cadre porteur selon l'une quelconque des revendications 12 à 14,
**caractérisé en ce que**
le point d'appui (2) à l'extrémité inférieure (13a) du poteau est formé comme un composant de bride (24) en forme d'une plate avec un perçage central (24a) qui reçoit à l'état monté l'extrémité inférieure (13a) du poteau par le composant de bride (24) étant librement rotatif, dans lequel les extrémités inférieures des potences de la structure d'appui (14) convergeant à ce composant de bride (24) sont attachées à les régions périphériques du composant de bride (24) en forme de plate, ces régions saillant de la circonférence du poteau de support (13).

16. Cadre porteur selon la revendication 15,
**caractérisé en ce que**
le perçage central (24a) du composant de bride (24) en forme de plate environne le poteau de support (13) reçu à la circonférence avec un espace radial qui est rempli d'une bague de roulement (25) qui est poussée sur le bord du perçage (24a) et sert de pivot pour le composant de bride (24).

17. Cadre porteur selon la revendication 16,
**caractérisé en ce que**
du bord intérieur du perçage central (24a) dans une direction substantiellement radiale un nez (24b) étant situé dans la plaine du composant de bride (24) en forme de plate s'élance vers l'intérieur dont la longueur radiale est au plus également longue que l'espace radial entre la circonférence du poteau et le bord intérieur du perçage central (24a) et que le matériau de la bague de roulement (25) est découpé de manière segmentaire par une longueur de circonférence qui dans la direction de circonférence corresponde substantiellement à la largeur du nez (24b) élançant de façon que la bague de roulement (25) poussé sur le bord du perçage est tenue de manière non-rotative par le nez auquel les surfaces frontales (25b) de la bague de roulement (25) limitant le segment découpé sont situées.

18. Cadre porteur selon la revendication 16 ou 17,
**caractérisé en ce que**,
la bague de roulement (25) a une section transversale en forme de U avec une amplitude intérieure substantiellement correspondant à la grosseur du composant de bride (24) en forme de plate entre les deux côtés (25c) de la bague de roulement (25) et que l'aperture limité par les extrémités libres des côtés est située à la circonférence extérieure de la bague de façon que par la bague de roulement (25) étant poussé sur le bord ses deux côtés s'étendent à les deux côtés des bords latéraux du perçage central (24a) tandis que l'élément de culasse (25d) de la bague de roulement (25) connectant les extrémités inférieures des côtés remplit l'espace entre le bord intérieur du perçage central (24a) et la circonférence extérieure du poteau de support (13).

19. Cadre porteur selon l'une quelconque des revendications 16 à 18,
**caractérisé en ce que**
la bague de roulement (25) se préférablement compose de matière plastique élastique.

20. Cadre porteur selon l'une quelconque des revendications 15 à 19,
**caractérisé en ce que**
le composant de bride (24) en forme de plate se compose de deux demi-coques attachées l'une à l'autre qui sont disposées sur la circonférence extérieure du poteau de support (13) et sont préférablement vissées l'une à l'autre.

21. Cadre porteur selon l'une quelconque des revendications 1 à 20,
**caractérisé en ce que**
le support central (1) comprend un element de base (1a) en forme de plate monté à l'extrémité supérieure du poteau de support (13) qui comprend à ses bords latéraux des brides de raccordement (1b-1e) pour attacher les potences de la structure d'appui (14), ces brides étant préférablement formées en une pièce avec l'élément de base (1a) et pliées vers la plaine de la plate.

22. Cadre porteur selon la revendication 21,
caractérisé d'un élément de base (1a) substantiellement rectangulaire, dans lequel à tous les quatre bords latéraux d'élément de base une bride de raccordement (1b-1e) est pourvue.

23. Cadre porteur selon l'une quelconque des revendications 1 à 22,
**caractérisé en ce que**
comme matériau pour la structure d'appui (14) fer zingué, aluminium dur et/ou acier affiné est pourvu.

24. Cadre porteur selon l'une quelconque des revendications 1 à 23,
caractérisé d'une structure d'appui (14) tenue ensemble par des vissages (26) et/ou des liaisons soudées.

25. Cadre porteur selon la revendication 24,
**caractérisé en ce que**,
pour tous les vissages des vis, des écrous et le cas échéant des rondelles d'une dimension égale sont pourvus.

## Revendications

1. Support frame for supporting planar solar panels (12), comprising a support pole (13), which, in its mounted position, is substantially vertical and embedded with its lower end (13a) in the ground or in an immovable anchorage (13b), on which support pole the solar panels (12) rest on a flat panel holder (8-11) with an upper and a lower area and are held by means of a support structure (14), which supports the panel holder from the back, and are turnable around the pole axis for azimuth tracking,
**characterized in that**
the support structure (14) comprises, on the upper pole end, a central support member (1), on which three central braces (6a-6c) are attached, which, in their mounted position, lie in a plane substantially vertical toward the pole axis and form a support triangle in said plane and the central brace (6a) of which is forming the hypotenuse of said support triangle and runs, in its mounted position, substantially parallel to the plane of the panel holder (8-11) and is attached substantially centrally to the rear side of the central support member (1), said rear side facing away from the panel holder (8-11), while the other two substantially equally long central braces (6b and 6c), which are forming the side legs of the support triangle, are attached with their ends enclosing the tip of the support triangle to the front side of the central support member (1), said front side facing the panel holder, that, between the two ends of the central brace (6a) forming the hypotenuse of the support triangle and a support site (2) on the lower pole end, one support brace (4a and 4b) runs slopingly downward, respectively, which is supplemented by two further support braces (3b and 3a) extending between the front, respectively, the rear side of the central support member (1) and the support site (2) on the lower pole end (13a) and of which the front support brace (3b) forms with its upper end a support for the lower middle rear area of the panel holder (8-11), while two lower lateral areas are supported on the rear side of the panel holder by two additional braces (4c and 4d), which are attached in the corresponding areas and extend slopingly from these two areas downward to the support site (2) on the lower pole end (13a), wherein on the fastening sites of these additional braces (4c and 4d) the ends of two holder braces (7a and 7b) are attached, which run between the corresponding lateral area on the rear side of the panel holder (8-11) and the opposite end of the central brace (6a) forming the hypotenuse of the support triangle and are rigidly connected to said ends and that for further support of the panel holder (8-11) a number of support elements are provided, which are attached on the upper rear area to the panel holder and run between the upper rear area of the panel holder and the central brace (6a) forming the hypotenuse of the support triangle.

2. Support frame according to claim 1,
**characterized in that**,
in order to achieve a rigidly adjusted elevation angle of the solar panels (12) resting on the panel holder (8-11), the support elements have a fixed length and are rigidly connected on their one end to the central brace (6a) forming the hypotenuse of the support triangle and on their other end to the upper rear area of the panel holder (8-11).

3. Support frame according to claim 2,
**characterized in that**
the additional braces, holder braces and support braces (4c, 4d-, 7a, 7b, 3b) of the support structure (14), which engage the two lower lateral areas and the lower middle area of the panel holder (8-11), are also rigidly connected to the panel holder.

4. Support frame according to claim 2 or 3,
**characterized in that**,
in their mounted position, the support elements with a fixed length are the straight extension of the three support braces (4a, 4b, 3a) which extend between the central brace (6a) forming the hypotenuse of the support triangle and the support site (2) on the lower pole end (13a), said extension running upwards across the substantially horizontal plane of the support triangle.

5. Support frame according to claim 1,
**characterized in that**,
in order to achieve an adjustable elevation angle of the solar panels (12) resting on the panel holder (8-11), the additional braces, holder braces and support braces (4c, 4d-, 7a, 7b, 3b) of the support structure (14), which engage the two lower lateral areas and the lower middle area of the panel holder, are connected articulately (15a-15c) to said areas and that the support elements (16, 17), which in this case can be articulated (16a, 16b and 17a, 17b) with their two ends to the upper rear side of the panel holder and to the central brace forming the hypotenuse of the support triangle, can be telescopically extended in length, manually or by a servomotor, and be locked in a desired length, manually or by the servomotor, respectively.

6. Support frame according to claim 5,
**characterized in that**
a total of at least two support elements (16 and 17) that are telescopically extendable are provided, which are articulated with their one end (16b and 17b) to the ends of the central brace (6a) forming the hypotenuse of the support triangle and with their other ends (16a and 17a) to the upper rear area of the panel holder (8-11) in such a manner that each support element in its mounted position and during adjustment of the elevation angle is movable in a substantially vertical plane parallel to the pole axis.

7. Support frame according to claim 6 with a manually adjustable elevation angle,
**characterized in that**
each support element (16 and 17) is formed as a manually telescopically extendable and lockable support brace (18).

8. Support frame according to claim 6 with an elevation angle adjustable by a servomotor,
**characterized in that**
each of the support elements (16 and 17) comprises a building unit (19) including a servomotor (19c) and a tubular telescope arrangement (19d), respectively, said telescope arrangement being in operative connection to and being extendable by a servomotor.

9. Support frame according to any of the claims 1 to 8,
**characterized in that**,
for supporting the upper and lower rear side areas, the panel holder comprises an upper (9) and a lower crossbeam (8), which, in a mounted state, extend spaced from each other substantially horizontally across about the entire breadth of the solar panel and by means of which the braces and the support elements of the support structure (14) are connected, wherein these two crossbeams (8 and 9) are connected to each other by means of several longitudinal beams (10) which, in a mounted state, are spaced from each other in the direction of the longitudinal extension of the crossbeams (8 and 9), and that the panel holder (8-11) is reinforced by four additional reinforcing braces (11a-11d), of which two braces are arranged crosswise, respectively, in order to form a reinforcing cross, wherein, in a mounted state, the two reinforcing crosses are positioned spaced next to each other in the direction of extension of the crossbeams (8, 9) and are connected with their four end points to the upper and lower crossbeam.

10. Support frame according to any of the claims 1 to 9,
**characterized in that**,
for realizing the azimuth tracking of the solar panels (12), the support pole (13) is anchored axially rotatable (at 20) on its lower end (13a) and rigidly connected to the central support member (1) on its upper pole end and that the support site (2) is also anchored torque-proof on the lower pole end of the support pole (13).

11. Support frame according to claim 10,
**characterized in that**,
the support site (2) is formed on the lower pole end (13a) by a connecting flange (2a) rigidly attachable to the support pole (13), on which flange the downward running braces of the support structure (14) are attached with their lower ends.

12. Support frame according to any of the claims 1 to 9,
**characterized in that**,
for realizing the azimuth tracking of the solar panels, the support pole (13) is anchored torque-proof on its lower end, while the central support member (1) on the upper pole end and the support site (2) on the lower pole end are mounted freely axially rotatable on the support pole (13).

13. Support frame according to claim 12,
**characterized in that**,
as a drive component for the azimuth tracking of the solar panels, a worm gear (21), which is rigidly connectable to the central support member (1), is provided, whose driving worm (21a), in a mounted state, meshes with the circumferential teeth of a gear wheel (21b) anchored axially torque-proof on the upper end of the support pole (13).

14. Support frame according to claim 12 or 13,
**characterized in that**,
for an additional support of the support site (2), two holding braces (5a and 5b) running on both sides of the pole (13) between the central support member (1) and the support site (2) are provided on the lower pole end (13a), whose respective ends are attached to the central support member (1) and the support site (2).

15. support frame according to any of the claims 12 to 14,
**characterized in that**,
the support site (2) on the lower pole end (13a) is formed as a plate-shaped flange member (24) with a central bore hole (24a), which, in a mounted state, receives the lower pole end (13a) while the flange member (24) is freely rotatable, wherein the lower ends of the braces of the support structure (14) converging on said flange member (24) are attached to the edge areas of the plate-shaped flange member (24), said edge areas protruding from the circumference of the support pole (13).

16. Support frame according to claim 15,
**characterized in that**
the central bore hole (24a) of the plate-shaped flange member (24) surrounds the received support pole (13) circumferentially with a radial space, which is filled with a bearing ring (25) made of a slidable material, which is pushed on the edge of the bore hole (24a) and serves as a swivel for the flange member (24).

17. Support frame according to claim 16,
**characterized in that**
a nose (24b) lying in the plane of the plate-shaped flange member (24) protrudes from the inner wall of the central bore hole (24a) in a substantially radial direction to the inside, which nose's radial length is at the most the same as the radial distance between the circumference of the pole and the inner wall of the central bore hole (24a), and that the material of the bearing ring (25) is cut away segment-like across a circumferential length that, in a circumferential direction, corresponds substantially to the breadth of the protruding nose (24b), such that the bearing ring (25) pushed onto the edge of the bore hole is retained torque-proof by the nose, on which the frontal faces (25b) of the bearing ring are lying, which define the cut away segment.

18. Support frame according to claim 16 or 17,
**characterized in that**
the bearing ring (25) has a U-shaped cross-section with an inner width between the two legs (25c) of the bearing ring (25) substantially corresponding to the thickness of the plate-shaped flange member (24), and that the opening defined by the free leg ends is disposed on the circumference of the ring, such that, when the bearing ring is pushed on (25), its two legs extend on both sides of the side walls of the central bore hole (24a), while the frame part (25d) of the bearing ring (25) fills the space between the inner wall of the central bore hole (24a) and the circumference of the support pole (13).

19. Support frame according to any of the claims 16 to 18,
**characterized in that**
the bearing ring (25) is preferably made of an elastic plastic material.

20. Support frame according to any of the claims 15 to 19,
**characterized in that**
the plate-shaped flange member (24) is made of two half shells attached to each other, which are placed on the circumference of the support pole (13) and preferably screwed together.

21. support frame according to any of the claims 1 to 20,
**characterized in that**
the central support member (1) comprises a plate-shaped base member (1a) mounted on the upper end of the support pole (13), which comprises on its side edges connection flanges (1b-1e) preferably made with the base member (1a) in one piece and inclined against the plane of the plate for attaching the braces to the support structure (14).

22. Support frame according to claim 21,
**characterized by**
a substantially rectangular base member (1a), wherein, on each of the four side edges of the base member, an angled connection flange (1b-1e) is provided.

23. Support frame according to any of the claims 1 to 22,
**characterized in that**,
as material for the support structure (14), zinc-coated iron, tempered aluminium and/or stainless steel are/is used.

24. Support frame according to any of the claims 1 to 23,
**characterized by**
a support structure (14) held together by bolted connections and/or welded joints.

25. Support frame according to claim 24,
**characterized in that**,
for any bolted connections, screws, nuts and, if required, washers of the same size are used.
